# EUROPEAN PATENT APPLICATION

(11) **EP 4 733 147 A1**
(43) Date of publication of application: **29.04.2026**
(21) Application number: 25197064.6
(22) Date of filing: 20.08.2025
(51) Int. Cl.: B60R 19/48

(54) **VEHICLE STRUCTURE**

(30) Priority: 25.10.2024 JP 2024187987
(71) Applicant: Suzuki Motor Corporation, Shizuoka 432-8611 (JP)
(72) Inventor: KAWAHARA, Shunya, Hamamatsu-shi, 432-8611 (JP); ARIMITSU, Kaishi, Hamamatsu-shi, 432-8611 (JP)
(74) Representative: Haseltine Lake Kempner LLP

(57) **Abstract**

[Problem to be Solved] Displacement of an exterior member including a detection wave passage section is reduced.

[Solution] A vehicle structure 10 includes a first exterior member 1 including a detection wave passage section 11 through which detection waves to be detected by a sensor device pass and constituting a design surface on a vehicle outer side, and a second exterior member 2 supporting the first exterior member 1 from a vehicle inner side or the vehicle outer side. The second exterior member 2 has, on the first exterior member 1 side, a first support wall surface 2A1 and a second support wall surface 2B1 that extend in directions intersecting each other, and the first exterior member 1 is supported on the first support wall surface 2A1 and the second support wall surface 2B1.

## Description

### [Technical Field]

The present invention relates to vehicle structures of an automobile or the like, and more specifically, relates to vehicle structures of a front portion or rear portion of a vehicle.

### [Background Art]

A sensor device configured to sense an environment outside a vehicle may be provided at a front portion or rear portion of a vehicle such as an automobile. Examples of the sensor device include a millimeter wave radar that uses electromagnetic waves in a millimeter wave band as detection waves, a sound wave sensor (ultrasonic wave sensor or sonar) that uses sound waves as detection waves, and a camera (image capturing device). The sensor device is disposed at the back surface of an exterior member, such as a bumper or a grille, that constitutes a design surface on the vehicle outer side, and the exterior member includes a detection wave passage section through which detection waves pass.

A structure disclosed in Patent Literature 1 is known as an example of a conventional vehicle structure having a structure for disposing a sensor device at the front portion or rear portion of a vehicle. The structure disclosed in Patent Literature 1 includes a lower grille disposed on a vehicle outer side of a radar module, and a protection cover attached to an opening portion of the lower grille and covering the radar module. The protection cover allows millimeter waves or microwaves transmitted and received by the radar module to pass therethrough.

### [Citation List]

### [Patent Literature]

[Patent Literature 1] JP 2021-025849 A

### [Summary of Invention]

### [Problem to be Solved by the Invention]

An exterior member such as the lower grille and the protection cover of Patent Literature 1 is often made of resin, and the rigidity of the exterior member is less than that of a vehicle body structural member. Thus, in Patent Literature 1, when external force due to vibrations of a vehicle during driving, minor collisions, or the like is applied to the exterior member, the protection cover as the detection wave passage section is potentially displaced, resulting in change in the relative positional relationship (distance and angle) between the protection cover and the radar module. Such change in the relative positional relationship between the detection wave passage section and the sensor device potentially leads to decrease in the sensing accuracy of the sensor device.

Thus, it is an object of the present invention to provide a vehicle structure that can reduce displacement of an exterior member including a detection wave passage section.

### [Means for Solving the Problem]

An aspect of the present invention is a vehicle structure including: a first exterior member having a detection wave passage section through which detection waves to be detected by a sensor device pass and constituting a design surface on a vehicle outer side; and a second exterior member supporting the first exterior member from a vehicle inner side or the vehicle outer side. In the vehicle structure, the second exterior member has, on the first exterior member side, a first support wall surface and a second support wall surface that extend in directions intersecting each other, and the first exterior member is supported on the first support wall surface and the second support wall surface.

### [Advantageous Effect of Invention]

According to an aspect of the present invention, it is possible to provide a vehicle structure that can reduce displacement of an exterior member including a detection wave passage section.

### [Brief Description of Drawings]

[Figure 1] Figure 1 is an exploded perspective view of a front portion of a vehicle to which a vehicle structure according to an embodiment of the present invention is applied.
[Figure 2] Figure 2 is a partial front view of the vehicle structure when viewed from a vehicle front side.
[Figure 3] Figure 3 is a partial perspective view of the vehicle structure when viewed from the vehicle front side.
[Figure 4] Figure 4 is a partial perspective view of the vehicle structure from which a first exterior member is removed when viewed from the vehicle front side.
[Figure 5] Figure 5 is a cross-sectional view schematically illustrating the vehicle structure.
[Figure 6] Figure 6 is a cross-sectional view schematically illustrating a vehicle structure according to a modification.
[Figure 7] Figure 7 is a partial rear view of the vehicle structure when viewed from a vehicle rear side.
[Figure 8] Figure 8 is a partial rear view of a sensor support member coupled to a second exterior member when viewed from the vehicle rear side.
[Figure 9] Figure 9 is a partial rear view of the vehicle structure for description of disposition of an exterior coupling positioning portion.
[Figure 10] Figure 10 is a cross-sectional view schematically illustrating a vehicle structure according to another modification.
[Figure 11] Figure 11 is a diagram schematically illustrating a modification of a detection wave passage section and a concave portion.
[Figure 12] Figure 12 is a partial front view of the vehicle structure when viewed from the vehicle front side, illustrating a modification of the first exterior member.

### [Mode for Carrying Out the Invention]

Exemplary embodiments of the present invention will be described below with reference to the accompanying drawings. In the drawings, the direction of arrow Fr indicates a vehicle front side in a vehicle front-rear direction. The direction of arrow L indicates a left side of the vehicle in a vehicle width direction in a state in which the vehicle is viewed from the rear side toward the front side. The direction of arrow U indicates a vehicle upper side in a vehicle up-down direction (hereinafter referred to as an up-down direction). In the following description, "front" and "rear" correspond to front and rear, respectively, in the vehicle front-rear direction, and "up" and "down" correspond to up and down, respectively, in the vehicle up-down direction. In addition, "left" and "right" correspond to left and right, respectively, in the vehicle width direction in a state viewed from the vehicle rear side toward the vehicle front side.

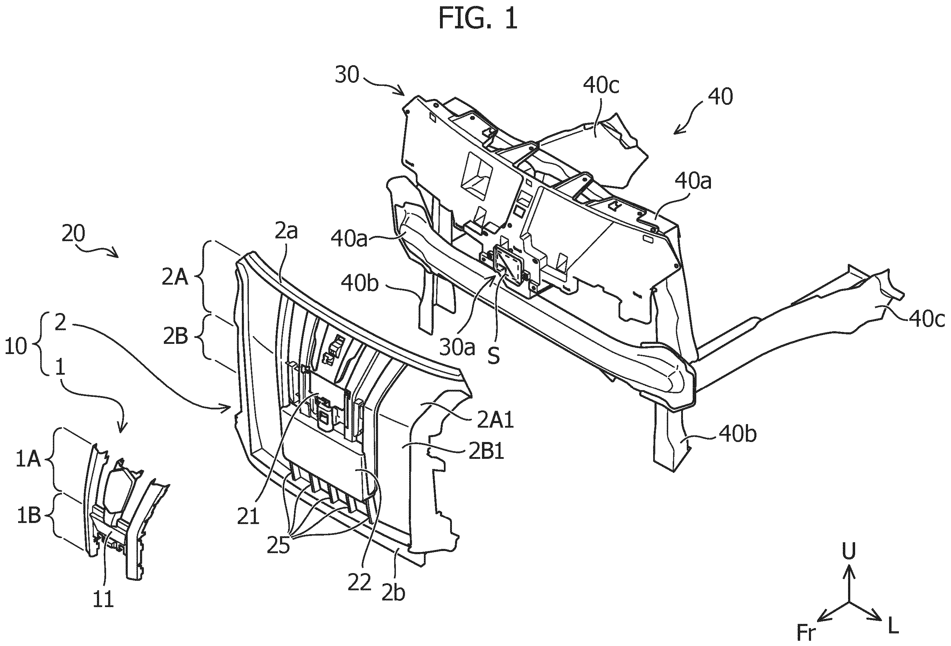

As illustrated in Figure 1, a vehicle structure 10 according to the present embodiment is applied to a front portion of a vehicle such as an automobile. The vehicle structure 10 includes a first exterior member 1 and a second exterior member 2 that are disposed at the front portion of the vehicle. The first exterior member 1 and the second exterior member 2 are components constituting an exterior panel 20 at the front portion of the vehicle and constitute a design surface on the vehicle outer side at the front portion of the vehicle. **In** the present embodiment, the second exterior member 2 is a large grille having a plurality of ventilation holes penetrating in the vehicle front-rear direction. A plate support portion 22 to which a number plate (or license plate) is attached is provided at a central portion of the second exterior member 2 in the vehicle width direction and at an intermediate portion thereof in the up-down direction. The first exterior member 1 is a decorative panel having a smaller size than the second exterior member 2 and is attached to a part of the second exterior member 2 from the vehicle front side above the plate support portion 22. The first exterior member 1 and the second exterior member 2 are, for example, injection-molded resin products.

In addition to the first and second exterior members 1 and 2, the exterior panel 20 may further include another exterior member such as a side panel disposed on each side of the second exterior member 2 in the vehicle width direction. Note that the front portion of the vehicle in the present invention includes not only a central portion in the vehicle width direction, which faces the vehicle front side, but also side end portions on both sides in the vehicle width direction, which face forward and obliquely to the sides.

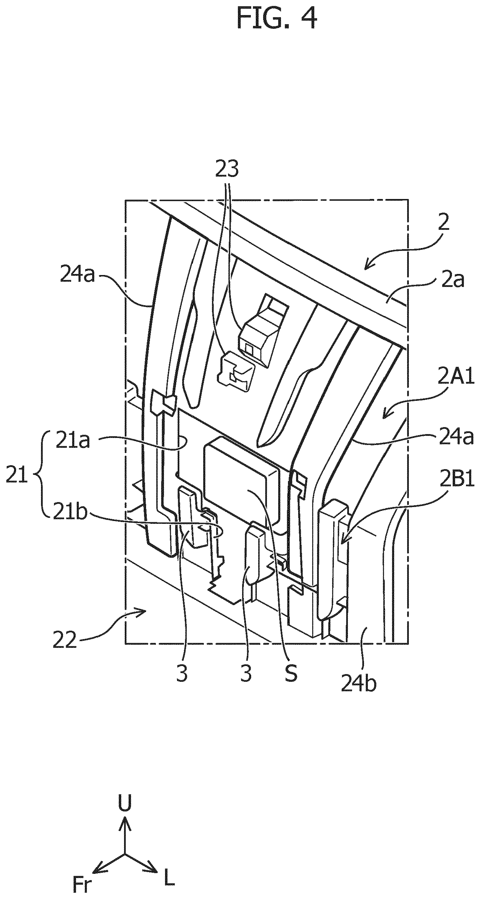

A sensor support member 30 that supports a sensor device S configured to sense an environment outside the vehicle, and a vehicle body structure member 40 are provided at the front portion of the vehicle. The sensor support member 30 is disposed on the vehicle rear side (vehicle inner side) of the exterior panel 20 (the first exterior member 1 and the second exterior member 2) and supports the sensor device S (see Figures 1 and 4) at a sensor support portion 30a. The sensor device S is, for example, a millimeter wave radar that uses electromagnetic waves in a millimeter wave band as detection waves, and transmits (emits) and receives (detects) detection waves. The vehicle body structure member 40 is a highly rigid member that is made of a steel plate or the like and constitutes a framework of the vehicle. The vehicle body structure member 40 includes a plurality of cross members 40a, a pair of left and right pillar members 40b, and a pair of left and right side members 40c. The sensor support member 30 is affixed to the vehicle body structure member 40 and is supported from the vehicle rear side by the vehicle body structure member 40.

The second exterior member 2 supports the first exterior member 1 from the vehicle rear side (vehicle inner side). Specifically, each of the first exterior member 1 and the second exterior member 2 is disposed so as to extend in the up-down direction and the vehicle width direction and substantially face the vehicle front side. The second exterior member 2 is adjacently disposed on the vehicle rear side of the first exterior member 1 and is coupled to the first exterior member 1 from the vehicle rear side. The second exterior member 2 is coupled to the sensor support member 30 and is supported by the vehicle body structure member 40 through the sensor support member 30. Note that, in the present embodiment, the "vehicle outer side" according to the present invention is the vehicle front side, and the "vehicle inner side" according to the present invention is the vehicle rear side.

As illustrated in Figures 1 to 3, the first exterior member 1 includes a detection wave passage section 11 through which detection waves to be detected by the sensor device S pass. As illustrated in Figures 1 and 4, in the second exterior member 2, a sensor opening 21 that penetrates in the vehicle front-rear direction and through which detection waves pass is formed at a portion corresponding to the detection wave passage section 11. The sensor device S faces the detection wave passage section 11 in the vehicle front-rear direction through the sensor opening 21. The detection wave passage section 11 is a thin plate-shaped portion substantially facing the vehicle front side and is formed of a material, such as a synthetic resin, which has a characteristic that detection waves are transmittable therethrough. Detection waves transmitted from the sensor device S transmit (pass) through the detection wave passage section 11 and are emitted to the vehicle front side. When there is an obstacle on the vehicle front side, detection waves having been reflected by the obstacle and transmitted (passed) through the detection wave passage section 11 are received and detected by the sensor device S.

Note that the sensor device S is not limited to a millimeter wave radar and may be a sound wave sensor (ultrasonic wave sensor or sonar) that uses sound waves as detection waves, a camera (image capturing device) that uses electromagnetic waves in a visible light band or an infrared band as detection waves, or the like. In this case, the detection wave passage section 11 may have a through-hole (opening). Detection waves may be sunlight or be transmitted from a detection wave transmission device provided separately from the sensor device S, and in such a case, the sensor device S may not transmit detection waves.

In the illustrated example, a cover member 5 for protecting a camera is provided between the detection wave passage section 11 and the plate support portion 22 in the up-down direction. The camera is disposed on the vehicle rear side of the cover member 5 and captures an image of an obstacle or the like on the vehicle front side through a camera exposure hole 5a. The sensor opening 21 has a substantially T-shape in a plan view from one side in the vehicle front-rear direction and includes a lateral portion 21a extending in the vehicle width direction and a vertical portion 21b extending in the up-down direction. The lateral portion 21a is an upper portion of the sensor opening 21. The vertical portion 21b is a lower portion of the sensor opening 21 and extends downward continuously from a central portion of the lateral portion 21a in the vehicle width direction. The detection wave passage section 11 covers at least part of the lateral portion 21a from the vehicle front side, and the cover member 5 is inserted into the vertical portion 21b from the vehicle rear side.

The second exterior member 2 includes, on the vehicle front side that is the first exterior member 1 side, a first support wall surface 2A1 and a second support wall surface 2B1 that extend in directions intersecting each other. The first exterior member 1 is supported on the first support wall surface 2A1 and the second support wall surface 2B1.

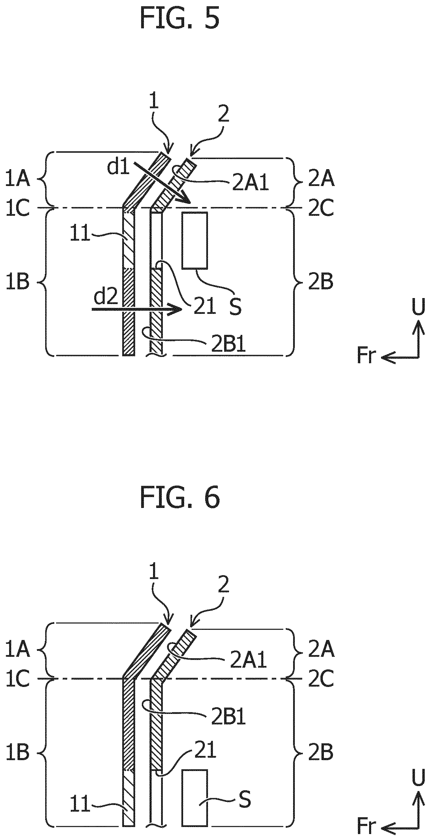

Figure 5 is a cross-sectional view in the up-down direction when viewed from the left side, schematically illustrating the first exterior member 1 and the second exterior member 2. Note that, as for the second exterior member 2 in Figures 5 and 6, only its upper portion including the support wall surfaces 2A1 and 2B1 is illustrated, and its lower portion is omitted. As illustrated in Figure 5, the first support wall surface 2A1 and the second support wall surface 2B1 in the present embodiment extend in directions intersecting each other in a side view from one side in the vehicle width direction, and in other words, are tilted relative to each other in the side view. The first exterior member 1 is disposed across the first support wall surface 2A1 and the second support wall surface 2B1.

Specifically, the second exterior member 2 includes a first wall portion 2A and a second wall portion 2B each extending in the vehicle width direction. A wall surface of the first wall portion 2A on the vehicle front side is the first support wall surface 2A1, and a wall surface of the second wall portion 2B on the vehicle front side is the second support wall surface 2B1. The second exterior member 2 bends in the vehicle front-rear direction along a boundary 2C extending in the vehicle width direction between the first wall portion 2A and the second wall portion 2B, and accordingly, the first wall portion 2A and the second wall portion 2B extend in directions intersecting each other, and the first support wall surface 2A1 and the second support wall surface 2B1 extend in directions intersecting each other, as well.

In the illustrated example, the second wall portion 2B is an intermediate portion of the entire second exterior member 2 in the up-down direction, which includes the sensor opening 21. The first wall portion 2A is a portion of the second exterior member 2 on the upper side of the second wall portion 2B and adjacent on the upper side of the second wall portion 2B. The second exterior member 2 bends toward the vehicle rear side along the boundary 2C such that the first wall portion 2A is tilted toward the vehicle rear side as it extends upward. The second support wall surface 2B1 extends in a direction substantially parallel to the up-down direction, and the first support wall surface 2A1 extends in an oblique direction relative to the up-down direction such that it is tilted toward the vehicle rear side as it extends upward. A lower portion of the first exterior member 1, which includes the detection wave passage section 11 is positioned on the second support wall surface 2B1, and an upper portion of the first exterior member 1 is positioned on the first support wall surface 2A1. In the illustrated example, the first wall portion 2A and the second wall portion 2B as part of the grille have structures such as concave-convex portions and insertion holes, and accordingly, the first support wall surface 2A1 and the second support wall surface 2B1 have structures such as concave-convex portions and openings.

In this manner, according to the present embodiment, the first exterior member 1 is supported on the first support wall surface 2A1 and the second support wall surface 2B1. Accordingly, displacement of the first exterior member 1 is restricted in a direction in which the first exterior member 1 overlaps the first support wall surface 2A1 (in other words, a thickness direction of the first wall portion 2A; specifically, see arrow d1 in Figure 5), and also in a direction in which the first exterior member 1 overlaps the second support wall surface 2B1 (in other words, a thickness direction of the second wall portion 2B; specifically, see arrow d2 in Figure 5). Since the first support wall surface 2A1 and the second support wall surface 2B1 extend in directions intersecting each other, displacement of the first exterior member 1 in two directions (specifically, the up-down direction and the vehicle front-rear direction) is restricted by the first support wall surface 2A1 and the second support wall surface 2B1. In other words, the first exterior member 1 is restrained by two surfaces (2A1 and 2B1) extending in directions different from each other. As a result, it is possible to reduce displacement of the first exterior member 1 when external force due to vibrations of the vehicle during driving, minor collisions of the vehicle, or the like is applied, and accordingly, it is possible to maintain the sensing accuracy of the sensor device S.

The vehicle structure 10 will be described below in detail with reference to Figures 6 to 11 as well.

As illustrated in Figures 1 to 3 and 5, the first exterior member 1 in the present embodiment includes a first supported portion 1A corresponding to the first support wall surface 2A1, and a second supported portion 1B corresponding to the second support wall surface 2B1. The first supported portion 1A and the second supported portion 1B are disposed adjacent to each other in the up-down direction. One of the first supported portion 1A and the second supported portion 1B includes the detection wave passage section 11, and the detection wave passage section 11 is disposed at a position near a boundary 1C between the first supported portion 1A and the second supported portion 1B in the up-down direction.

Specifically, the first supported portion 1A is a portion of the first exterior member 1, which faces the first support wall surface 2A1 and overlaps the first support wall surface 2A1. The second supported portion 1B is a portion of the first exterior member 1, which faces the second support wall surface 2B1 and overlaps the second support wall surface 2B1. As illustrated in Figure 5, the first exterior member 1 bends in the vehicle front-rear direction along the boundary 1C extending in the vehicle width direction between the first supported portion 1A and the second supported portion 1B, and accordingly, the first supported portion 1A and the second supported portion 1B extend in directions intersecting each other. The first exterior member 1 and the second exterior member 2 are positioned relative to each other such that a bending portion of the first exterior member 1 at the boundary 1C and a bending portion of the second exterior member 2 at the boundary 2C overlap. In the side view, the first supported portion 1A and the second supported portion 1B extend in the same directions as the first support wall surface 2A1 and the second support wall surface 2B1, respectively. In the illustrated example, the second supported portion 1B is a lower portion of the first exterior member 1, which includes the detection wave passage section 11, and the first supported portion 1A is an upper portion of the first exterior member 1. The detection wave passage section 11 is disposed at a position in the second supported portion 1B, which is adjacent or close to the boundary 1C in the up-down direction.

Such a structure of the first exterior member 1 increases the support rigidity of the first support wall surface 2A1 and the second support wall surface 2B1 for the detection wave passage section 11. As a result, it is possible to more reliably reduce displacement of the detection wave passage section 11, thereby more reliably maintaining the accuracy of the sensor device S. Figure 6 illustrates a modification of the present embodiment and another embodiment of the present invention. As in the modification, in a case in which the detection wave passage section 11 is disposed on an opposite side of the second supported portion 1B to the boundary 1C, the support rigidity of the first support wall surface 2A1 for the detection wave passage section 11 may be reduced as compared to the structure illustrated in Figure 5 since the detection wave passage section 11 is provided at a position distant from the boundary 1C. Note that, although the modification illustrated in Figure 6 is disadvantageous in terms of reduction of the support rigidity in this manner, it is advantageous in that the detection wave passage section 11 and the sensor device S are more likely to displace toward the vehicle rear side (vehicle inner side) when subjected to relatively large external force since the detection wave passage section 11 and the sensor device S are disposed at positions distant from the boundaries C. Due to such an advantage, the configuration of the modification illustrated in Figure 6 can also be employed.

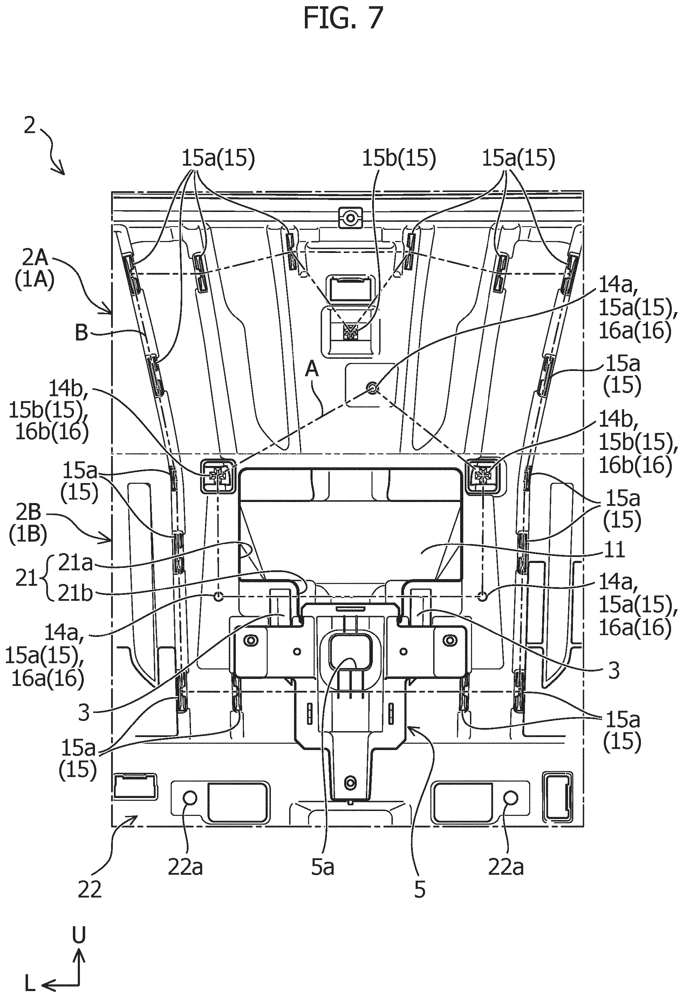

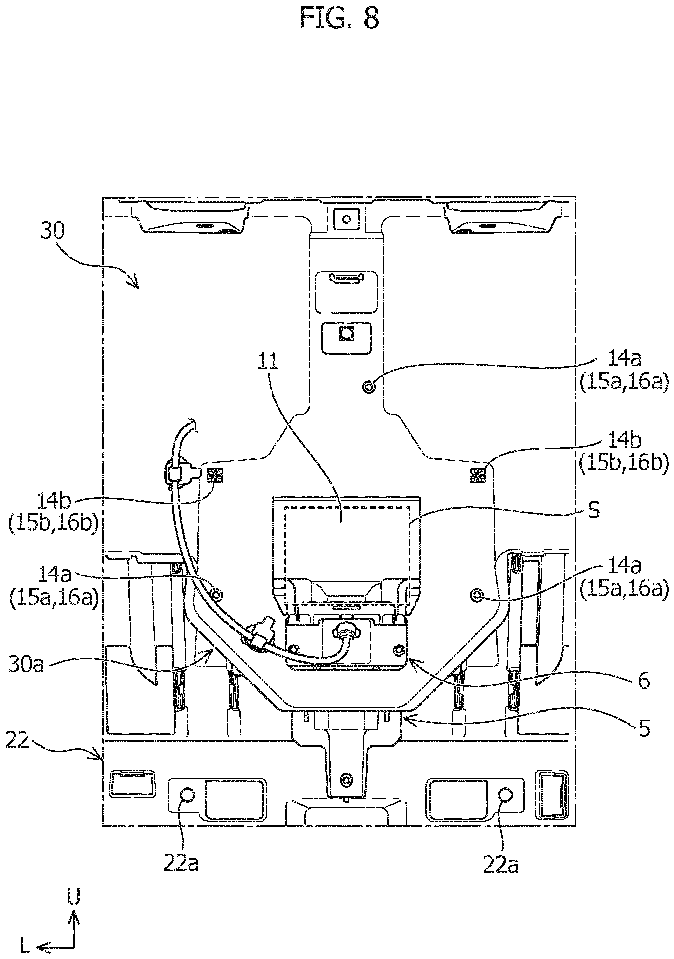

As illustrated in Figures 7 and 8, in the present embodiment, at least one of the first supported portion 1A and the second supported portion 1B includes at least one of a triple-coupling portion 14a coupled in an overlapping manner to both the second exterior member 2 and the sensor support member 30, and a triple-positioning portion 14b positioned with respect to both the second exterior member 2 and the sensor support member 30. As described above, the sensor support member 30 is a member that supports the sensor device S. The sensor support member 30 is disposed on the vehicle rear side (vehicle inner side) of the first and second exterior members 1 and 2 and is coupled to the second exterior member 2 from the vehicle rear side. Accordingly, the first exterior member 1 is disposed overlapping the second exterior member 2 and the sensor support member 30 in the vehicle front-rear direction.

With such a structure of the first exterior member 1, at least one of the first supported portion 1A and the second supported portion 1B is directly coupled and/or is positioned relative to the sensor support member 30. Accordingly, when external force due to vibrations of the vehicle during driving, minor collisions of the vehicle, or the like is applied to the first exterior member 1, it is possible to more reliably maintain the relative positional relationship between the detection wave passage section 11 and the sensor device S, and accordingly, more reliably maintain the sensing accuracy of the sensor device S. Moreover, the first exterior member 1 is directly supported by the sensor support member 30 in addition to the second exterior member 2. Accordingly, the support rigidity for the detection wave passage section 11 further increases, which makes it possible to more reliably reduce displacement of the detection wave passage section 11.

Figure 7 is a partial rear view of the vehicle structure 10 when viewed from the vehicle rear side, and Figure 8 is a partial rear view of the sensor support member 30 coupled to the second exterior member 2 when viewed from the vehicle rear side. In the illustrated example, three triple-coupling portions 14a and two triple-positioning portions 14b are provided at a peripheral portion around the detection wave passage section 11 in the first exterior member 1. The first supported portion 1A includes one of the triple-coupling portions 14a, and the second supported portion 1B includes the other two triple-coupling portions 14a and the two triple-positioning portion 14b. In this manner, each of the first supported portion 1A and the second supported portion 1B preferably includes at least one of the triple-coupling portions 14a and the triple-positioning portions 14b to further increase the support rigidity for the detection wave passage section 11. However, the numbers of and disposition of the triple-coupling portions 14a and the triple-positioning portions 14b are not limited thereto, and only one of the first supported portion 1A and the second supported portion 1B may include at least one of the triple-coupling portions 14a and the triple-positioning portions 14b.

Each triple-coupling portion 14a is coupled to the second exterior member 2 and the sensor support member 30 by using, for example, a coupling member such as a bolt or a clip. For example, each triple-coupling portion 14a includes a boss protruding toward the vehicle rear side from the rear surface of the supported portion 1A or 1B and having a screw hole. A boss hole into which the boss is inserted is formed at a position in the second exterior member 2, which corresponds to the triple-coupling portion 14a, and a bolt hole into which the bolt is inserted is formed at a position in the sensor support member 30, which corresponds to the triple-coupling portion 14a. The first exterior member 1 is coupled to both the second exterior member 2 and the sensor support member 30 when each bolt inserted into the corresponding bolt hole from the vehicle rear side is screwed into the screw hole of the corresponding boss.

Each triple-positioning portions 14b is positioned with respect to the second exterior member 2 and the sensor support member 30, for example, through a combination of a positioning protrusion and a positioning hole. For example, each triple-positioning portion 14b includes a positioning protrusion that protrudes toward the vehicle rear side from the rear surface of the supported portion 1A or 1B. Each positioning protrusion illustrated has a cross-shaped (+-shaped) section. A first positioning hole is formed at a position in the second exterior member 2, which corresponds to each triple-positioning portion 14b, and a second positioning hole is formed at a position in the sensor support member 30, which corresponds to each triple-positioning portion 14b. The first exterior member 1 is positioned with respect to both the second exterior member 2 and the sensor support member 30 when each positioning protrusion is inserted into the corresponding first and second positioning holes from the vehicle front side.

As illustrated in Figure 7, the first exterior member 1 in the present embodiment includes a plurality of exterior coupling positioning portions 15 arranged in an annular configuration so as to surround the detection wave passage section 11. Each of the plurality of exterior coupling positioning portions 15 is coupled to the second exterior member 2 or is positioned with respect to the second exterior member 2. Specifically, each exterior coupling positioning portion 15 is an exterior coupling portion 15a coupled to the second exterior member 2 or is an exterior positioning portion 15b positioned with respect to the second exterior member 2. The exterior coupling portion 15a is coupled to the second exterior member 2, for example, by using a coupling member such as a bolt or a clip or through engagement between an engagement claw and an engagement hole. The exterior positioning portion 15b is positioned with respect to the second exterior member 2, for example, through a combination of a positioning protrusion and a positioning hole.

Such a structure increases the rigidity of a region of the first exterior member 1, which is surrounded by the plurality of exterior coupling positioning portions 15 and which includes the detection wave passage section 11. Accordingly, it is possible to more reliably reduce deformation of the detection wave passage section 11 when external force due to vibrations of the vehicle, minor collisions, or the like is applied to the first exterior member 1, thereby more reliably maintaining the sensing accuracy of the sensor device S.

In the illustrated example, the first exterior member 1 includes a first set of exterior coupling positioning portions 15 arranged along annular first imaginary line A, and a second set of exterior coupling positioning portions 15 arranged along annular second imaginary line B. The first imaginary line A and the second imaginary line B are polygons surrounding the detection wave passage section 11. In other words, in a plan view from one side in the vehicle front-rear direction, an imaginary line connecting the first set of exterior coupling positioning portions 15 forms polygonal first imaginary line A, and an imaginary line connecting the second set of exterior coupling positioning portions 15 forms polygonal second imaginary line B. The first imaginary line A is positioned around the detection wave passage section 11. The second imaginary line B forms a polygon larger than that of the first imaginary line A, and is positioned outside the first imaginary line A. The first set of exterior coupling positioning portions 15 is constituted by three exterior coupling portions 15a and two exterior positioning portions 15b. The second set of exterior coupling positioning portions 15 is constituted by 16 exterior coupling portions 15a and one exterior positioning portion 15b. Note that, as described later, the first set of exterior coupling positioning portions 15 is coupled also to the sensor support member 30 in addition to the second exterior member 2 or is positioned also with respect to the sensor support member 30 in addition to the second exterior member 2. On the other hand, the second set of exterior coupling positioning portions 15 is coupled only to the second exterior member 2 or is positioned only with respect to the second exterior member 2.

As illustrated in Figures 7 and 8, the first exterior member 1 in the present embodiment includes a plurality of sensor coupling positioning portions 16 arranged in an annular configuration around the detection wave passage section 11 so as to surround the detection wave passage section 11. Each of the plurality of sensor coupling positioning portions 16 is coupled to the sensor support member 30 or is positioned with respect to the sensor support member 30. In other words, each sensor coupling positioning portion 16 is a sensor coupling portion 16a coupled to the sensor support portion 30a or is a sensor positioning portion 16b positioned with respect to the sensor support portion 30a.

Such a structure increases the rigidity of a region of the first exterior member 1, which is surrounded by the plurality of sensor coupling positioning portions 16 and includes the detection wave passage section 11. Accordingly, it is possible to more reliably reduce deformation of the detection wave passage section 11 when external force due to vibrations of the vehicle, minor collisions, or the like is applied to the first exterior member 1, thereby more reliably maintaining the sensing accuracy of the sensor device S. In particular, the rigidity of the detection wave passage section 11 and its peripheral portion can be effectively increased since the plurality of sensor coupling positioning portions 16 is arranged around the detection wave passage section 11. Moreover, in an assembly process of the vehicle structure 10, the relative positional relationship between the detection wave passage section 11 and the sensor device S can be easily adjusted so that the detection wave passage section 11 is appropriately positioned with respect to the sensor device S.

In the illustrated example, the plurality of sensor coupling positioning portions 16 is arranged along the above-described first imaginary line A and is constituted by three sensor coupling portions 16a and two sensor positioning portions 16b. The plurality of sensor coupling positioning portions 16 is the above-described first set of exterior coupling positioning portions 15. In other words, each sensor coupling positioning portion 16 (or exterior coupling positioning portion 15) is a triple-coupling portion 14a or a triple-positioning portion 14b.

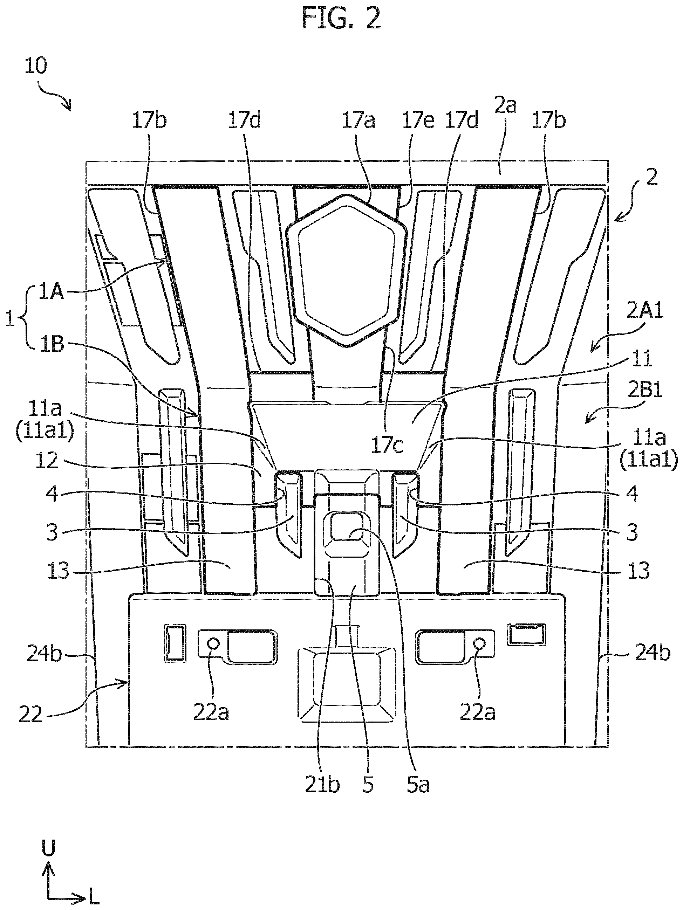

As illustrated in Figures 2 to 4, one of the first exterior member 1 and the second exterior member 2 includes a convex portion 3 that protrudes in the vehicle front-rear direction (vehicle in-out direction), and the other of the first exterior member 1 and the second exterior member 2 includes a concave portion 4 into which the convex portion 3 is fitted in the vehicle front-rear direction (vehicle in-out direction). Specifically, the convex portion 3 is formed at one of a portion of the first exterior member 1 around the detection wave passage section 11 and a portion of the second exterior member 2 corresponding to the portion around the detection wave passage section 11. The concave portion 4 is formed at the other of the portion of the first exterior member 1 around the detection wave passage section 11 and the portion of the second exterior member 2 corresponding to the portion around the detection wave passage section 11. Note that the "vehicle in-out direction" according to the present invention is a direction connecting the vehicle inner and outer sides of the first exterior member 1 (or the second exterior member 2) and is the vehicle front-rear direction in the present embodiment.

With such a structure, displacement of the first exterior member 1 with respect to the second exterior member 2 in the vehicle width direction and the up-down direction is restricted by the convex portion 3 and the concave portion 4 that are fitted to each other in the vehicle front-rear direction. Accordingly, it is possible to reduce displacement of the first exterior member 1 when external force due to vibrations of the vehicle during driving, minor collisions of the vehicle, or the like is applied, and accordingly, maintain the sensing accuracy of the sensor device S. In particular, displacement of the detection wave passage section 11 in the vehicle width direction and the up-down direction can be effectively reduced since the convex portion 3 and the concave portion 4 are positioned at portions around the detection wave passage section 11 or portions corresponding thereto.

In the illustrated example, the convex portion 3 is formed at a portion of the second exterior member 2 corresponding to a portion around the detection wave passage section 11 and protrudes toward the vehicle front side (vehicle outer side). The concave portion 4 is formed at a portion corresponding to the convex portion 3 around the detection wave passage section 11 of the first exterior member 1. The convex portion 3 is inserted into the concave portion 4 in the vehicle front-rear direction from the vehicle rear side and is fitted to the concave portion 4 in the vehicle front-rear direction. Specifically, the convex portion 3 is provided on each side of the vertical portion 21b of the sensor opening 21 in the vehicle width direction and extends toward the vehicle lower side from the vicinity of a lower edge portion of an opening edge of the lateral portion 21a. The convex portion 3 is formed by recessing part of the second wall portion 2B toward the vehicle front side. The concave portion 4 is formed at a portion of a frame portion 12 surrounding the detection wave passage section 11, the portion corresponding to each convex portion 3, and is recessed upward from a lower end of the frame portion 12 and is open toward the lower side, the vehicle front side, and the vehicle rear side. The concave portion 4 has a shape corresponding to the outer shape of an upper portion of the convex portion 3 so that the upper portion of the convex portion 3 is fitted to the concave portion 4.

As illustrated in Figure 2, in the present embodiment, an outer edge portion 11a of the detection wave passage section 11 in the vehicle width direction includes a tilted portion 11a1 that is tilted inward in the vehicle width direction toward a lower end of the outer edge portion 11a. The convex portion 3 and the concave portion 4 are disposed adjacent to the tilted portion 11a1. With such a structure, the width of the detection wave passage section 11 decreases toward one end in the up-down direction. Accordingly, it is possible to reduce the area of the detection wave passage section 11 when viewed from the vehicle front side to improve design appearance while reducing displacement of the detection wave passage section 11. Note that, in the present embodiment, the lower end of the outer edge portion 11a corresponds to "one end of the outer edge portion in the up-down direction" according to the present invention.

In the illustrated example, the detection wave passage section 11 has a substantially inverted trapezoid shape in a plan view from one side in the vehicle front-rear direction. Accordingly, the outer edge portion 11a on each side in the vehicle width direction is tilted in the entire range from its upper end to its lower end and entirely constitutes the tilted portion 11a1.

As illustrated in Figures 1 and 2, in the present embodiment, the second exterior member 2 includes the plate support portion 22 that supports a number plate, and the first exterior member 1 includes a plate adjacent portion 13 that is adjacently disposed on a side of the plate support portion 22, which is closer to the detection wave passage section 11. The rigidity of the plate support portion 22 increases by supporting a number plate. Since the plate adjacent portion 13 is disposed adjacent to such a plate support portion 22, the support rigidity of the second exterior member 2 for the first exterior member 1, in particular, the support rigidity of a peripheral portion of the detection wave passage section 11 in the first exterior member 1 increases. Accordingly, displacement of the detection wave passage section 11 can be more reliably reduced.

The plate support portion 22 has a substantially rectangular shape that is elongated in the vehicle width direction in a plan view from the vehicle front side. The first exterior member 1 is attached to a portion of the second exterior member 2, which does not overlap the plate support portion 22, and in the present embodiment, is disposed on the upper side relative to the plate support portion 22 as described above. The detection wave passage section 11 is disposed on the upper side relative to the plate support portion 22, and the plate adjacent portion 13 is adjacently disposed on the upper side of the plate support portion 22. In the illustrated example, the detection wave passage section 11 is disposed at a position spaced upward from the plate support portion 22 in the up-down direction. The plate adjacent portion 13 is provided on each side of the detection wave passage section 11 in the vehicle width direction and extends between the detection wave passage section 11 and the plate support portion 22 in the up-down direction. The plate support portion 22 may protrude toward the vehicle front side relative to the second support wall surface 2B 1, and a lower end of the plate adjacent portion 13 may contact an upper end of the plate support portion 22.

As illustrated in Figure 2, in the present embodiment, the plate support portion 22 includes a plate coupling portion 22a to which a number plate is coupled, and the plate adjacent portion 13 is disposed around the plate coupling portion 22a. The plate coupling portion 22a has a bolt hole, and a number plate is coupled to the plate coupling portion 22a by a bolt that is screwed into the bolt hole. The plate coupling portion 22a to which the number plate is coupled and its peripheral portion have particularly high rigidity. Accordingly, with the plate adjacent portion 13 disposed around the plate coupling portion 22a, the support rigidity of the first exterior member 1 further increases and displacement of the detection wave passage section 11 can be further reliably reduced.

Specifically, two plate coupling portions 22a are provided at an upper end portion of the plate support portion 22 and are spaced from each other in the vehicle width direction. The two plate adjacent portions 13 are disposed around the two plate coupling portions 22a, respectively. **In** the illustrated example, the distance between the two plate adjacent portions 13 in the vehicle width direction is substantially equal to the distance between the two plate coupling portions 22a in the vehicle width direction, and the two plate adjacent portions 13 are disposed at the same positions or substantially the same positions as the two plate coupling portions 22a, respectively, in the vehicle width direction. **In** other words, each plate adjacent portion 13 is disposed directly above or substantially directly above the corresponding plate coupling portion 22a.

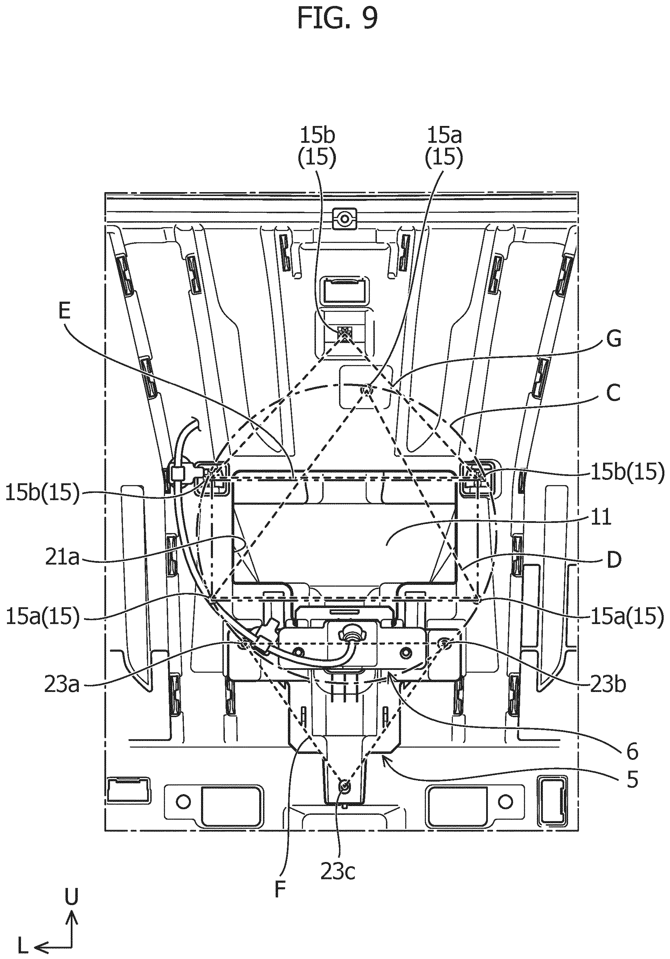

Figure 9 is a partial plan view of the vehicle structure 10 when viewed from the vehicle rear side for description of preferable disposition of the exterior coupling positioning portions 15 and reinforcement member coupling portions (23a, 23b, and 23c) in the present embodiment. The camera cover member 5 also functions as a reinforcement member that reinforces a peripheral portion of the sensor opening 21 and is coupled to the peripheral portion of the sensor opening 21 from the vehicle rear side. Specifically, the second exterior member 2 includes a plurality of reinforcement member coupling portions at a peripheral portion of the vertical portion 21b of the sensor opening 21, and the cover member 5 is coupled to the second exterior member 2 at the plurality of reinforcement member coupling portions. The plurality of reinforcement member coupling portions includes first, second, and third reinforcement member coupling portions 23a, 23b, and 23c disposed on the left side, right side, and lower side, respectively, of the vertical portion 21b. A camera bracket 6 for attaching a camera to the cover member 5 is attached to the cover member 5 from the vehicle rear side (vehicle inner side).

Some exterior coupling positioning portions 15 and some reinforcement member coupling portions (23a and 23b) are arranged so as to surround the detection wave passage section 11 (or the lateral portion 21a). Specifically, in a plan view from one side in the vehicle front-rear direction (the vehicle in-out direction), some exterior coupling positioning portions 15 and some reinforcement member coupling portions (23a and 23b) are arranged along circular imaginary line C surrounding the detection wave passage section 11 (or the lateral portion 21a). In the illustrated example, three exterior coupling portions 15a, two exterior positioning portions 15b, and two reinforcement member coupling portions 23a and 23b are arranged along the imaginary line C. With such a structure, it is possible to effectively increase the support rigidity of the second exterior member 2 and the cover member 5 for the detection wave passage section 11, thereby more reliably reducing displacement of the detection wave passage section 11.

Figure 9 illustrates three exterior positioning portions 15b. In a plan view from one side in the vehicle front-rear direction, the three exterior positioning portions 15b are disposed at the three apexes of imaginary triangle G that is convex upward. Lower two exterior positioning portions 15b are disposed near upper two corners of the detection wave passage section 11, respectively.

An imaginary line connecting three exterior coupling portions 15a surrounding the detection wave passage section 11 (or the lateral portion 21a) forms first imaginary triangle D. In a plan view in the vehicle front-rear direction (vehicle in-out direction), a central portion of the first imaginary triangle D is positioned at a substantially central portion of the detection wave passage section 11. With such a disposition, it is possible to effectively increase the support rigidity of the second exterior member 2 for the detection wave passage section 11, thereby more reliably reducing displacement of the detection wave passage section 11. As described above, the three exterior coupling portions 15a are triple-coupling portions 14a as well and are also coupled to the sensor support member 30 in addition to the second exterior member 2. Accordingly, the rigidity of a peripheral portion of each of the three exterior coupling portions 15a increases, and as a result, displacement of the detection wave passage section 11 can be further reliably reduced.

In a plan view in the vehicle front-rear direction (vehicle in-out direction), the detection wave passage section 11 has a quadrilateral shape (in the illustrated example, an inverted trapezoid shape), and four exterior coupling positioning portions 15 (specifically, two exterior coupling portions 15a and two exterior positioning portions 15b) are disposed near four corners of the detection wave passage section 11, respectively. Accordingly, an imaginary line connecting the four exterior coupling positioning portions 15 forms imaginary quadrangle E (in the illustrated example, imaginary rectangle). With such a disposition, it is possible to more reliably reduce displacement of the detection wave passage section 11.

In a plan view in the vehicle front-rear direction (vehicle in-out direction), an imaginary line connecting the first to third reinforcement member coupling portions 23a, 23b, and 23c forms second imaginary triangle F. The second imaginary triangle F is positioned below the first imaginary triangle D, and the first imaginary triangle D is convex upward whereas the second imaginary triangle F is convex downward. In other words, the first imaginary triangle D and the second imaginary triangle F are outward-facing with respect to each other. With such a disposition, it is possible to effectively reduce deformation of the sensor opening 21 and its peripheral portion.

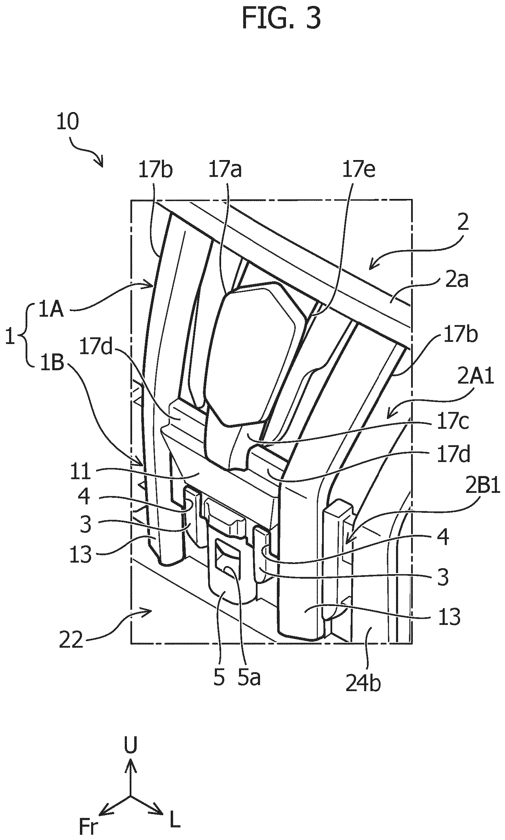

Detailed structures of the first exterior member 1 and the second exterior member 2 in the present embodiment will be described below. As illustrated in Figures 2 and 3, the first exterior member 1 includes an emblem support portion 17a, a vertical extension portion 17b, a lower vertical connection portion 17c, a lateral connection portion 17d, and an upper vertical connection portion 17e.

The emblem support portion 17a supports an emblem (not illustrated) from the vehicle rear side (vehicle inner side). In the illustrated example, the emblem support portion 17a is provided at an upper portion of the first exterior member 1 and is disposed above the detection wave passage section 11. The second exterior member 2 includes a protruding portion 23 that is positioned on the vehicle rear side (vehicle inner side) of the emblem support portion 17a and protrudes toward the vehicle front side (see Figure 4). Such a structure increases the support rigidity for the emblem.

The vertical extension portion 17b is an elongated portion extending in the up-down direction and is disposed on each side (left or right side) of the detection wave passage section 11 in the width direction. The vertical extension portion 17b is longer than the detection wave passage section 11 in the up-down direction and extends upward and downward relative to the detection wave passage section 11. In the illustrated example, the vertical extension portion 17b extends in the up-down direction from an upper edge portion 2a of the second exterior member 2 to the plate support portion 22. Such a structure increases the support rigidity for the detection wave passage section 11.

The lower vertical connection portion 17c is a portion connecting the emblem support portion 17a and the detection wave passage section 11 in the up-down direction and extends in the up-down direction from a lower edge of the emblem support portion 17a to an upper edge of the detection wave passage section 11. The lateral connection portion 17d is a portion extending in the width direction along the upper edge of the detection wave passage section 11 and connecting the lower vertical connection portion 17c to the vertical extension portion 17b in the width direction. A lower edge of the lateral connection portion 17d is connected to the upper edge of the detection wave passage section 11, and both ends of the lateral connection portion 17d in the width direction are connected to outer edges of the lower vertical connection portion 17c in the width direction and inner edges of the vertical extension portion 17b in the width direction.

With such a structure, the emblem support portion 17a and the detection wave passage section 11 are connected to each other through the lower vertical connection portion 17c and the lateral connection portions 17d on both sides, and accordingly, the support rigidity of both the emblem support portion 17a and the detection wave passage section 11 increases. In particular, since the rigidity of the emblem support portion 17a increases when the emblem is fixed thereto, the rigidity of the detection wave passage section 11 and its vicinity effectively increases. Moreover, since the emblem support portion 17a is supported by (is connected to) the vertical extension portions 17b on both sides through the lower vertical connection portion 17c and the lateral connection portions 17d on both sides, the support rigidity for the emblem support portion 17a and the emblem supported by the emblem support portion 17a increases.

The upper edge portion 2a of the second exterior member 2 has a convex shape protruding toward the vehicle front side relative to the first support wall surface 2A1. The upper vertical connection portion 17e extends upward from the emblem support portion 17a in the up-down direction and has an upper end in contact with the upper edge portion 2a from below. Accordingly, displacement of the emblem support portion 17a can be restricted.

As illustrated in Figures 1 to 4, the second exterior member 2 includes an inner vertical reinforcement portion 24a, an outer vertical reinforcement portion 24b, and a plurality of ribs 25. The inner vertical reinforcement portion 24a is provided on each side (left or right side) of the detection wave passage section 11 in the width direction so as to be positioned on the rear side of the corresponding vertical extension portion 17b of the first exterior member 1. Each inner vertical reinforcement portion 24a has a convex shape protruding toward the vehicle front side to have increased rigidity. Each inner vertical reinforcement portion 24a extends in the up-down direction from the upper edge portion 2a to the plate support portion 22 and has upper and lower ends connected to the upper edge portion 2a and the plate support portion 22, respectively. Each vertical extension portion 17b is coupled to the corresponding inner vertical reinforcement portion 24a from the vehicle front side. Accordingly, the support rigidity of the first exterior member 1 increases.

The outer vertical reinforcement portion 24b is provided on each side of an attachment region of the second exterior member 2 in the width direction, where the first exterior member 1 is attached. Each outer vertical reinforcement portion 24b has an upper end connected to the upper edge portion 2a to have increased rigidity. Accordingly, the rigidity of the attachment region increases. Each outer vertical reinforcement portion 24b extends downward beyond the upper end of the plate support portion 22 and is connected to a side surface of the plate support portion 22. Accordingly, the rigidity of the plate support portion 22 increases as well.

The plurality of ribs 25 (see Figure 1) is arranged below the plate support portion 22 at intervals in the width direction, and each rib 25 extends in the up-down direction from a lower edge of the plate support portion 22 to a lower edge portion 2b of the second exterior member 2. Accordingly, the rigidity of the plate support portion 22 as well as the rigidity of the attachment region are increased, and displacement of the first exterior member 1 is more reliably reduced.

Although the embodiment of the present invention is described above, the present invention is not limited to the above-described embodiment and may include further modifications and changes based on the technical concept of the present invention.

For example, the second exterior member 2 supports the first exterior member 1 from the vehicle inner side in the above-described embodiment, but it may instead support the first exterior member 1 from the vehicle outer side. In this case, the second exterior member 2 is disposed on the vehicle outer side (vehicle front side) of the first exterior member 1 and covers part of the first exterior member 1, except for at least the detection wave passage section 11, from the vehicle outer side (vehicle front side). The detection wave passage section 11 is exposed on the vehicle outer side through the sensor opening 21 of the second exterior member 2.

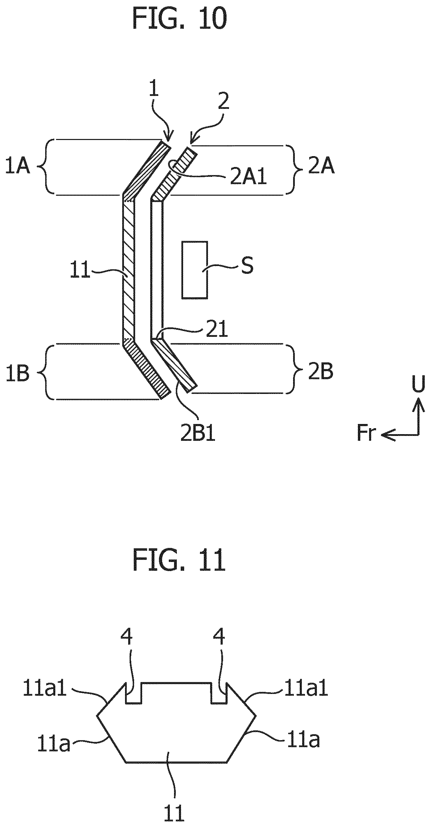

The first supported portion 1A and the second supported portion 1B are disposed adjacent to each other in the above-described embodiment, but instead, the first supported portion 1A and the second supported portion 1B may be disposed apart from each other as illustrated in Figure 10. Figure 10 is a cross-sectional view in the up-down direction when viewed from the left side, schematically illustrating the first exterior member 1 and the second exterior member 2. In this case, the detection wave passage section 11 is disposed between the first supported portion 1A and the second supported portion 1B. With such a disposition as well, the support rigidity of the first support wall surface 2A1 and the second support wall surface 2B1 for the detection wave passage section 11 increases, and it is thus possible to more reliably reduce displacement of the detection wave passage section 11, thereby more reliably maintaining the accuracy of the sensor device S. The first support wall surface 2A1 and the second support wall surface 2B1 are disposed at positions apart from each other as well, in accordance with disposition of the first supported portion 1A, the second supported portion 1B, and the detection wave passage section 11, and the sensor opening 21 is provided between the first wall portion 2A and the second wall portion 2B.

In the above-described embodiment, the first support wall surface 2A1 and the second support wall surface 2B1 extend in directions intersecting each other in a side view from one side in the vehicle width direction, but they are not limited thereto and may extend in directions intersecting each other in a plan view from one side in the up-down direction. For example, both side portions of the second exterior member 2 in the vehicle width direction may be tilted relative to the vehicle width direction so as to face forward and obliquely to the sides, and wall surfaces of both side portions on the vehicle outer side may constitute the first support wall surface 2A1 and the second support wall surface 2B1. In this case, the first support wall surface 2A1 and the second support wall surface 2B1 are disposed apart from each other in the vehicle width direction, and the first supported portion 1A and the second supported portion 1B are also disposed apart from each other in the vehicle width direction.

In the above-described embodiment, each sensor coupling positioning portion 16 is a triple-coupling portion 14a or a triple-positioning portion 14b coupled to or positioned with respect to the second exterior member 2 in addition to the sensor support member 30, but it is not limited thereto and may be configured to be coupled only to the sensor support member 30 or be positioned only with respect to the sensor support member 30. In this case, each sensor coupling positioning portion 16 may be provided at a position different from the first set of exterior coupling positioning portions 15.

In the above-described embodiment, the first exterior member 1 includes the concave portion 4 and the second exterior member 2 includes the convex portion 3, but they are not limited thereto, and the first exterior member 1 may include a convex portion 3 that protrudes toward the vehicle rear side (vehicle inner side) and the second exterior member 2 may include a concave portion 4 to which the convex portion 3 is fitted from the vehicle front side (the vehicle outer side). Moreover, in the above-described embodiment, the convex portion 3 and the concave portion 4 are provided on the lower side relative to the detection wave passage section 11, but the positions of the convex portion 3 and the concave portion 4 are not limited thereto and may be other positions relative to the detection wave passage section 11. For example, as illustrated in Figure 11, the concave portion 4 may be provided on the upper side of the detection wave passage section 11.

In the above-described embodiment, the outer edge portion 11a is tilted in the entire range from its upper end to its lower end and entirely constitutes the tilted portion 11a1, but instead, only an upper or lower portion of the outer edge portion 11a may be the tilted portion 11a1. Moreover, in the above-described embodiment, the tilted portion 11a1 is tilted inward in the vehicle width direction as it extends toward the lower end, but instead, may be tilted inward in the vehicle width direction as it extends toward the upper end. In other words, the "one end of the outer edge portion in the up-down direction" according to the present invention may be the upper end of the outer edge portion 11a. Figure 11 illustrates a modification of the detection wave passage section 11. In the modification, the tilted portion 11a1 is provided only at the upper portion of the outer edge portion 11a and tilted inward in the vehicle width direction as it extends toward the upper end.

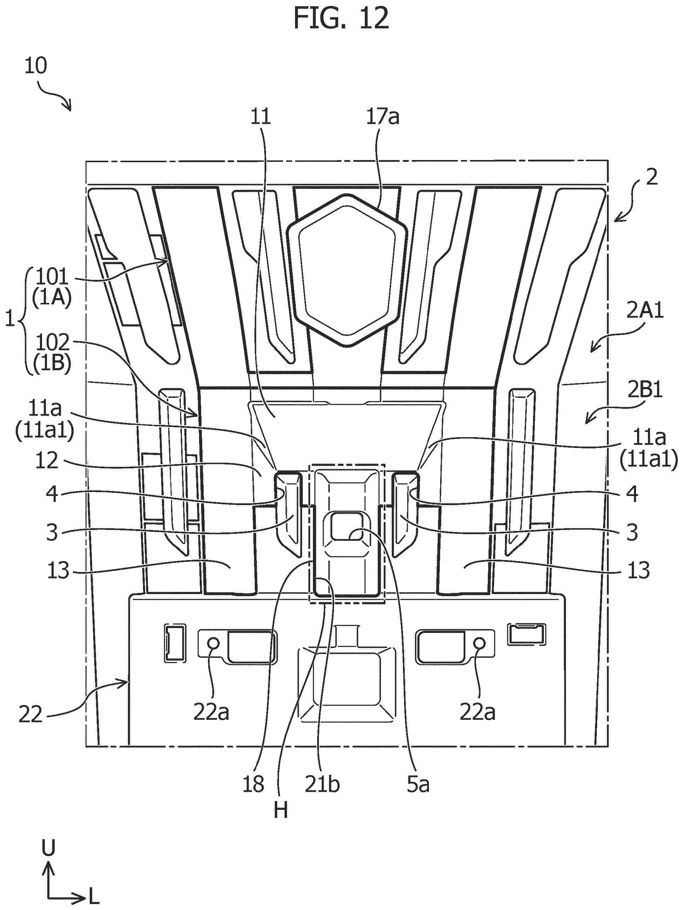

In the above-described embodiment, the first exterior member 1 is constituted by a single member but it is not limited thereto and may be constituted by a plurality of members. For example, as illustrated in Figure 12, the first exterior member 1 may be constituted by a first member 101 and a second member 102 that is a separate member from the first member 101. The first member 101 is a portion of the first exterior member 1, which includes the emblem support portion 17a and corresponds to the first support wall surface 2A1. The second member 102 is another portion of the first exterior member 1 and includes the detection wave passage section 11. In the illustrated example, the first member 101 is constituted by the first supported portion 1A, and the second member 102 is constituted by the second supported portion 1B. Moreover, the cover member 5 is a separate member from the first exterior member 1 in the above-described embodiment, but it is not limited thereto and may be formed integrally with the first exterior member 1. Specifically, the second member 102 may include a cover portion 18 corresponding to the cover member 5. With such a structure, it is possible to easily position and fix the emblem support portion 17a and the detection wave passage section 11 at respective desired positions. Moreover, in this case, a region H including the cover portion 18 is entirely recessed toward the vehicle front side, and accordingly, the rigidity around the detection wave passage section 11 increases. In addition, a lower end of the cover portion 18 (lower end of the region H) contacts the plate support portion 22 from above, and accordingly, the rigidity around the detection wave passage section 11 further increases.

In the above-described embodiment, the vehicle structure 10 includes the first exterior member 1 that is a decorative panel and the second exterior member 2 that is a grille, but it is not limited thereto and may include first and second exterior members of any other kind. Specifically, the vehicle structure of the present invention may be applied to the front portion of a vehicle including an exterior panel having a structure different from that of the exterior panel 20 described above, and the "first exterior member" and the "second exterior member" according to the present invention may be exterior members of any other kind disposed at the front portion of the vehicle. Moreover, in the above-described embodiment, the second exterior member 2 as well as the first exterior member 1 constitutes a design surface, but the second exterior member 2 may have no design surface in a case in which the second exterior member 2 supports the first exterior member 1 from the vehicle inner side. For example, the second exterior member 2 may be entirely covered from the vehicle outer side by the first exterior member 1 having a relatively large size.

In the above-described embodiment, the vehicle structure is applied to the front portion of a vehicle, but it is not limited thereto and may be applied to a rear portion of the vehicle. Specifically, the first and second exterior members may be disposed at the rear portion of the vehicle. In a case in which the vehicle structure is applied to the rear portion of the vehicle, the first and second exterior members are a rear bumper, a rear grille, a decorative panel, or the like, which are exterior members disposed at the vehicle rear portion. In this case, the "vehicle outer side" according to the present invention is the vehicle rear side, and the "vehicle inner side" according to the present invention is the vehicle front side.

### [Reference Signs List]

- 1: First exterior member
- 1A: First supported portion
- 1B: Second supported portion
- 1C: Boundary
- 11: Detection wave passage section
- 11a: Outer edge portion
- 11a1: Tilted portion
- 12: Frame portion
- 13: Plate adjacent portion
- 14a: Triple-coupling portion
- 14b: Triple-positioning portion
- 15: Exterior coupling positioning portion
- 15a: Exterior coupling portion
- 15b: Exterior positioning portion
- 16: Sensor coupling positioning portion
- 16a: Sensor coupling portion
- 16b: Sensor positioning portion
- 17a: Emblem support portion
- 17b: Vertical extension portion
- 17c: Lower vertical connection portion
- 17d: Lateral connection portion
- 17e: Upper vertical connection portion
- 18: Cover portion
- 2: Second exterior member
- 2A: First wall portion
- 2B: Second wall portion
- 2C: Boundary
- 2A1: First support wall surface
- 2B1: Second support wall surface
- 21: Sensor opening
- 21a: Lateral portion
- 21b: Vertical portion
- 22: Plate support portion
- 22a: Plate coupling portion
- 23: Protruding portion
- 24a: Inner vertical reinforcement portion
- 24b: Outer vertical reinforcement portion
- 25: Rib
- 3: Convex portion
- 4: Concave portion
- 5: Cover member
- 5a: Camera exposure hole
- 6: Camera bracket
- 10: Vehicle structure
- 20: Exterior panel
- 30: Sensor support member
- 30a: Sensor support portion
- 40: Vehicle body structure member
- A: First imaginary line
- B: Second imaginary line
- C: Imaginary line
- D: First imaginary triangle
- E: Imaginary quadrangle
- F: Second imaginary triangle
- G: Imaginary triangle

## Claims

1. A vehicle structure comprising:
a first exterior member including a detection wave passage section through which detection waves to be detected by a sensor device pass and constituting a design surface on a vehicle outer side; and
a second exterior member supporting the first exterior member from a vehicle inner side or the vehicle outer side, the vehicle structure being **characterized in that**
the second exterior member has, on the first exterior member side, a first support wall surface and a second support wall surface that extend in directions intersecting each other, and
the first exterior member is supported on the first support wall surface and the second support wall surface.

2. The vehicle structure according to claim 1, wherein
the first exterior member has
a first supported portion corresponding to the first support wall surface, and
a second supported portion corresponding to the second support wall surface,
the first supported portion and the second supported portion are disposed adjacent to each other,
one of the first supported portion and the second supported portion includes the detection wave passage section, and
the detection wave passage section is disposed at a position near a boundary between the first supported portion and the second supported portion.

3. The vehicle structure according to claim 1, wherein
the first exterior member has
a first supported portion corresponding to the first support wall surface, and
a second supported portion corresponding to the second support wall surface,
the first supported portion and the second supported portion are disposed apart from each other, and
the detection wave passage section is disposed between the first supported portion and the second supported portion.

4. The vehicle structure according to claim 1 or 2, wherein
the first exterior member has
a first supported portion corresponding to the first support wall surface, and
a second supported portion corresponding to the second support wall surface, and
at least one of the first supported portion and the second supported portion includes at least one of:
a triple-coupling portion coupled in an overlapping manner to both the second exterior member and a sensor support member that supports the sensor device, and
a triple-positioning portion positioned with respect to both the second exterior member and the sensor support member.

5. The vehicle structure according to claim 4, wherein both the first supported portion and the second supported portion include at least one of the triple-coupling portion and the triple-positioning portion.

6. The vehicle structure according to claim 1 or 2, wherein
the first exterior member includes a plurality of exterior coupling positioning portions arranged in an annular configuration so as to surround the detection wave passage section, and
each of the plurality of exterior coupling positioning portions is coupled to the second exterior member or is positioned with respect to the second exterior member.

7. The vehicle structure according to claim 1 or 2, wherein
the first exterior member includes a plurality of sensor coupling positioning portions arranged in an annular configuration around the detection wave passage section so as to surround the detection wave passage section, and
each of the plurality of sensor coupling positioning portions is coupled to a sensor support member supporting the sensor device or is positioned with respect to the sensor support member.
